# EUROPEAN PATENT SPECIFICATION

(11) **EP 3 895 915 B1**
(45) Date of publication and mention of the grant of the patent: **17.04.2024**
(21) Application number: 20748704.2
(22) Date of filing: 21.01.2020
(51) Int. Cl.: B60C 13/00, B60C 17/00

(54) **RUN-FLAT TIRE**
NOTLAUFREIFEN
PNEU À FLANCS RENFORCÉS

(30) Priority: 30.01.2019 JP 2019014427
(43) Date of publication of application: 20.10.2021
(73) Proprietor: Sumitomo Rubber Industries, Ltd., Kobe-shi, Hyogo 651-0072 (JP)
(72) Inventor: AOKI Daichi, Kobe-shi, Hyogo 651-0072 (JP); SUGIMOTO Mutsuki, Kobe-shi, Hyogo 651-0072 (JP); KAWAMURA Takanobu, Kobe-shi, Hyogo 651-0072 (JP)
(74) Representative: Manitz Finsterwald Patent- und Rechtsanwaltspartnerschaft mbB
(86) International application number: PCT/JP2020/001877
(87) International publication number: WO 2020/158501

(56) References cited:
- WO-A1-2009/017165
- WO-A1-2016/143757
- JP-A- 2010 270 176
- JP-A- 2010 285 514
- JP-A- 2011 140 258
- JP-A- 2015 101 219
- JP-B2- 6 274 500
- RU-C2- 2 523 881
- US-A1- 2014 048 193
- US-B2- 9 102 201

## Description

### [TECHNICAL FIELD]

The present invention relates to a run-flat tire provided with a sidewall reinforcing layer.

### [BACKGROUND ART]

In recent years, side-reinforced run-flat tires having a sidewall reinforcing layer (support layer) inside the sidewall have been developed and are becoming widespread. High-hardness crosslinked rubber is used for this sidewall reinforcing layer, and when the internal pressure drops due to a puncture, the load is supported by the sidewall reinforcing layer, and it is configured to suppress the bending of the tire in the punctured state. Therefore, it is possible to travel a certain distance even in a punctured state.

However, during puncture running (run-flat running), radial deformation is concentrated on the sidewall reinforcing layer, and the sidewall reinforcing layer reaches a very high temperature, so that high temperature durability of the tire is required.

Therefore, in order to reduce the temperature rise during such run-flat running, various techniques for promoting heat dissipation have been proposed.

For example, a technique has been proposed in which grooves are provided on the surface of the sidewall to increase the contact area of the sidewall with the atmosphere to promote heat dissipation (see, for example, Patent Document 1).

In addition, a technique for generating eddy around the tire by providing protrusions on the side portion to promote heat dissipation by this turbulence (see, for example, Patent Document 2), and a technique for generating turbulence by forming a large number of dimples on the sidewall surface (see, for example, Patent Document 3) are disclosed.

### [PRIOR ART DOCUMENTS]

### [PATENT DOCUMENT]

[Patent Document 1] JP2007-50854A
[Patent Document 2] JP2016-20187A
[Patent Document 3] JP2011-37372A

A run flat tire in accordance with the preamble of the independent claims is known from US 2014/048193 A1, JP 6 274500 B2, RU 2 523 881 C2, WO 2009/017165 A1 and US 9 102 201 B2.

### [SUMMARY OF INVENTION]

### [PROBLEM TO BE SOLVED BY THE INVENTION]

However, in the prior art, the study of heat dissipation due to the structure of the tire has been the main focus, and the study of the material has not been sufficient

Therefore, it is an object of the present invention to provide a run-flat tire having improved durability during run-flat running by studying the material.

### [MEANS FOR SOLVING THE PROBLEM]

The present inventors have earnestly studied to solve the above problem, and found that the above problem can be solved by a run flat tire having the features of independent claims 1, 2 or 3. Sub-claims are directed to preferred embodiments of the invention.

According to an embodiment of the invention, the difference between the loss tangent of the sidewall reinforcing layer at 100°C and the loss tangent of the sidewall at 75°C, |100°Ctan δ-75°Ctan δ|, is less than 0.1.

According to an embodiment of the invention, the difference between the loss tangent of the sidewall reinforcing layer at 100°C and the loss tangent of the sidewall at 60°C, |100°Ctan δ-60°Ctan δ| is less than 0.15.

According to an embodiment of the invention, the difference between the loss tangent of the sidewall reinforcing layer at 100°C and the loss tangent of the sidewall at 75°C, |100°Ctan δ-75°Ctan δ|, is less than 0.1; and
the difference between the loss tangent of the sidewall reinforcing layer at 100°C and the loss tangent of the sidewall at 60°C, |100°Ctan δ-60°Ctan δ| is less than 0.15.

According to an embodiment of the invention, the sidewall reinforcing layer has the breaking strength TB (MPa) × break elongation EB (%) of 350 or more at 100°C.

According to an embodiment of the invention, the sidewall reinforcing layer has the breaking strength TB (MPa) × break elongation EB (%) of 400 or more at 100°C.

According to an embodiment of the invention, the sidewall reinforcing layer has the breaking strength TB (MPa) × break elongation EB (%) of 700 or more at 100°C.

According to an embodiment of the invention, the sidewall reinforcing layer has 100°Ctan δ of 0.055 or less.

According to an embodiment of the invention, the sidewall reinforcing layer has 100°Ctan δ of 0.05 or less.

According to an embodiment of the invention, the sidewall reinforcing layer has 60°Ctan δ of 0.16 or less.

According to an embodiment of the invention, the sidewall reinforcing layer has 60°Ctan δ of 0.15 or less.

According to an embodiment of the invention, the sidewall reinforcing layer has 60°Ctan δ of 0.1 or less.

According to an embodiment of the invention, the uneven portion has a width of 1 mm or more and 8 mm or less and has a convex portion having a height of 0.3 mm or more and 2.5 mm or less with respect to the concave portion formed at a pitch of 6 mm or more and 35 mm or less.

### [THE EFFECT OF THE INVENTION]

According to the present invention, it is possible to provide a run-flat tire having improved durability during run-flat running.

### [BRIEF DESCRIPTION OF THE DRAWINGS]

[Fig.1] A sectional view showing a part of the run-flat tire according to one embodiment of this invention.
[Fig.2A] A perspective view showing an example of the form of the uneven portion schematically.
[Fig.2B] A perspective view showing another example of the form of the uneven portion schematically.
[Fig.3] A figure showing the cross-sectional shape of the uneven portion schematically.

### [EMBODIMENTS FOR CARRYING OUT THE INVENTION]

### [1] Background to completion of the present invention

As described above, in the conventional run-flat tire, the sidewall (hereinafter, also referred to as "SW") becomes high temperature during the run-flat running, so that improvement of the high temperature durability is required.

Therefore, the present inventors have investigated in detail the state of temperature rise during run-flat running on a run-flat tire having an uneven portion formed on the surface of the SW. Specifically, a run-flat run was performed at an outside air temperature of 20°C at a speed of 60km/h, and the surface temperatures of the sidewall reinforcing layer (hereinafter, also referred to as "SW reinforcing layer") and the convex and concave portions of the SW were examined.

As a result, it was found that when the temperature of the SW reinforcing layer reached about 100°C, the temperature of the convex portion was about 60°C, and the temperature of the concave portion was about 75°C. That is, it was found that a larger temperature difference than expected exists between the SW reinforcing layer and the SW surface, and a large temperature difference also exists between the convex portion and the concave portion.

As a result of various experiments and studies based on the above results, the present inventors have come up with the idea of applying a technique for improving the tensile properties of the SW reinforcing layer (breaking strength TB (MPa) × breaking elongation EB (%)) and, further, adjusting the loss tangent, tan δ, at the temperature of each part during run flat running, depending on the temperature difference between the convex portion and the concave portion on the SW reinforcing layer and the SW surface portion, in addition to the conventional technology for promoting heat dissipation of the SW in order to improve the durability performance during run-flat running. Then, as a result of the experiment, the present invention was completed.

The present invention has been made based on the above idea, and will be specifically described below based on the embodiments.

### [2] Embodiment of the present invention

### 1. Characteristic configuration in the present embodiment of the invention

First, the characteristic configuration of the run-flat tire according to the present embodiment of the invention will be described, and then other configurations will be described.

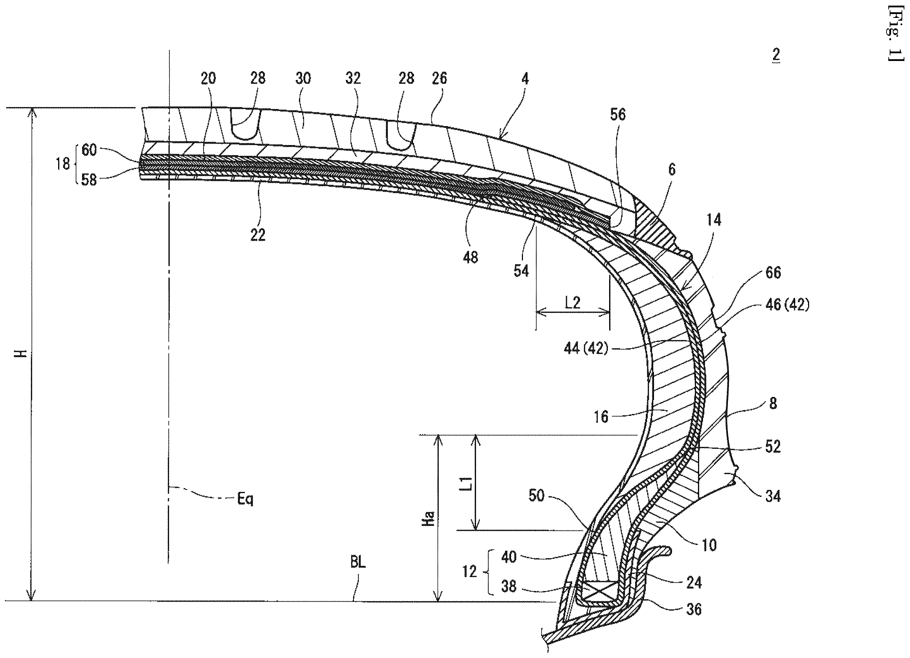

Fig. 1 is a cross-sectional view showing a part of a run-flat tire (hereinafter, also simply referred to as "tire") according to an embodiment of the present invention. The tire 2 includes a tread 4, a wing 6, a sidewall (hereinafter, also referred to as "SW") 8, a clinch portion 10, a bead 12, a carcass 14, a sidewall reinforcing layer (hereinafter, also referred to as "SW reinforcing layer") 16, a belt 18, a band 20, an inner liner 22, and a chafer 24. Then, in the present embodiment of the invention, the surface portion of the SW8 has an uneven portion 66.

### (1) Uneven portion

Uneven portion 66 is formed on the surface of SW8.

In the present embodiment of the invention, the uneven portion 66 is formed on the outer surface portion of the SW8 in the tire axial direction of the SW reinforcing layer 16. By forming the uneven portion in this way, the surface of the SW8 can be cooled during traveling. As a result, it is possible to suppress the temperature rise of the SW8 during run-flat running and improve the durability. Here, the uneven portion 66 may have protrusions as in Patent Document 2 or dimples as in Patent Document 3. That is, when a protrusion is formed on the uneven portion 66, the SW8 surface portion on which the protrusion is not formed corresponds to a concave portion, and the protrusion corresponds to a convex portion; and when dimples are formed on the uneven portion 66, the SW8 surface portion on which the dimple is not formed corresponds to a convex portion and the dimple corresponds to a concave portion.

The uneven portion 66 may be formed on the entire surface of the SW8 from the inner edge portion in the tire radial direction to the outer edge portion, and may be provided along the circumferential direction of the tire in a part between the inner edge portion and the outer edge portion in the radial direction of the tire.

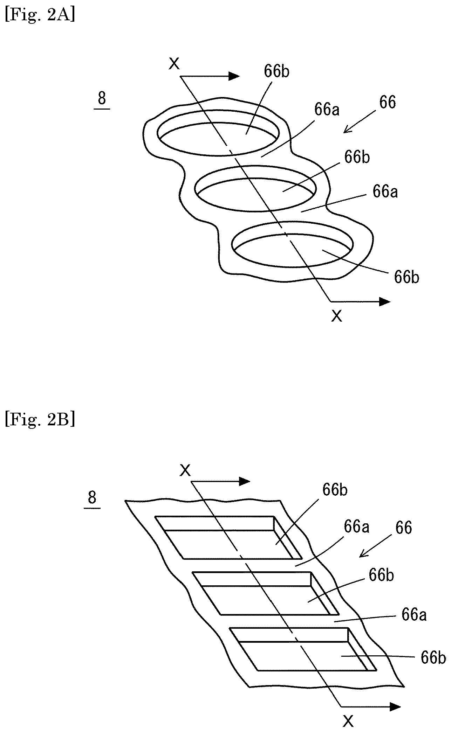

Fig. 2A and Fig. 2B are perspective views schematically showing one form of an uneven portion on the SW surface portion of the run-flat tire according to the present embodiment of the invention, respectively. The uneven portion 66 is formed so that the convex portions 66a and the concave portions 66b are alternately arranged in the tire circumferential direction. The shape of the uneven portion 66 is not particularly limited, and, for example, a circle as shown in Fig. 2A or a quadrangle such as a rectangle parallel to the tire circumferential direction as shown in Fig. 2B is used. Note that X-X is a virtual line indicating the tire circumferential direction.

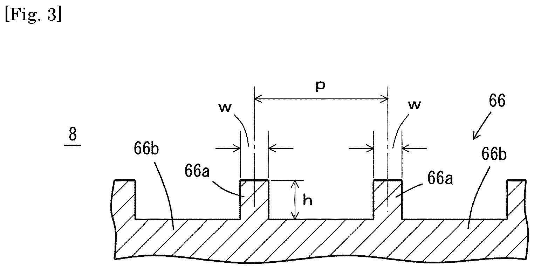

Fig. 3 is a cross-sectional view showing the uneven portion 66 in the direction perpendicular to the surface of SW8 through X-X of Figs. 2A and 2B when the uneven portion 66 is cut on the surface perpendicular to the surface. In Fig. 3, w is the width of the convex portion 66a (the length in the X-X direction), and h is the height (the length in the vertical plane direction with respect to the concave surface). Further, p is the pitch of the convex portions 66a (the sum of the closest distance between the two convex portions 66a adjacent to each other in the X-X direction and the value of 1/2 of the width of each of the two adjacent convex portions 66a). In the present embodiment of the invention, it is preferable that the height h of the convex portion 66a is 0.3mm or more and 2.5mm or less, the width w is 1mm or more and 8mm or less, and the pitch p is 6mm or more and 35mm or less. As a result, the SW8 can be cooled more effectively during traveling. The shape and arrangement of the convex portions 66a are not limited as long as they satisfy the ranges h, w and p defined above. For example, the convex portions 66a having different h may be arranged alternately in the X-X directions. The length of the concave portion 66b in the tire radial direction is, for example, 5mm to 50mm.

Further, although not shown, as described above, the convex portion 66a may be formed by a plurality of protrusions having a constant height, and the portion sandwiched between the protrusions may form the concave portion 66b. In this case, the plurality of protrusions extends radially in the tire radial direction, for example, and may be arranged at equal intervals in the tire circumferential direction. Instead, the longitudinal direction may be inclined at a predetermined angle with respect to the tire radial direction, and arranged parallel to each other and at equal intervals in the tire circumferential direction.

Even when the convex portion 66a is formed by the protrusions, there is no limitation on the shape and arrangement as long as the ranges h, w, and p defined above are satisfied. Even when the convex portion 66a is formed by the protrusion, the cross-sectional view is as shown in Fig. 3. The length of the protrusion in the tire radial direction is, for example, 5mm to 50mm.

### (2) Temperature characteristics of SW and SW reinforcing layer

As shown in Fig. 1, the SW reinforcing layer 16 is located inside the SW 8 in the axial direction and is sandwiched between the carcass 14 and the inner liner 22.

The SW reinforcing layer 16 is made of a crosslinked rubber composition or a resin composition having high hardness. When the tire 2 is punctured, the SW reinforcing layer 16 supports the load together with the SW 8. Due to the presence of the SW reinforcing layer 16, the tire 2 can travel a certain distance even in a punctured state.

### (a) Sidewall reinforcing layer

In the present embodiment of the invention, the SW reinforcing layer 16 has the following characteristics.

### (A) TB × EB

The breaking strength TB (MPa) × breaking elongation EB (%) at 100°C is 320 or more. In the case of run-flat running, since a large load is applied to the SW reinforcing layer 16, the temperature of the SW reinforcing layer 16 reaches, for example, 80 to 120°C even when the SW 8 is effectively cooled. In the present embodiment of the invention, TB × EB at 100°C is increased to improve resistance to high temperatures, so that durability can be improved and the running distance can be extended.

Further, it is preferable that the TB × EB of the SW reinforcing layer 16 at 100°C is further increased. Specifically, by increasing it to 350 or more, 400 or more, 700 or more, and 1000 or more, the tensile resistance at high temperature can be improved, and
the durability is further improved.

### (B) 100°Ctan δ

The SW reinforcing layer 16 has a 100°Ctan δ of 0.06 or less. As a result, heat generation during running, which is an obstacle to improving run-flat running performance, is suppressed, so that durability is improved and the running distance can be extended.

The 100°Ctan δ of the SW reinforcing layer 16 is preferably smaller. Specifically, as it becomes smaller such as 0.055 or less, 0.05 or less, and 0.04 or less, heat generation can be further suppressed, and the durability is further improved.

### (b) SW

SW8 has a 60°Ctan δ of 0.17 or less. As a result, the heat generation of the SW8 is suppressed during the run-flat running, and the heat dissipation of the SW reinforcing layer 16 arranged inside is promoted. As a result, the temperature rises of both the SW8 and the SW reinforcing layer 16 are suppressed, so that the durability is improved and the running distance can be extended.

The 60°Ctan δ of SW is preferably smaller. Specifically, as it becomes smaller such as 0.16 or less, 0.15 or less, 0.1 or less and 0.08 or less, heat generation and thus the temperature rises of both of the SW8 and SW reinforcing layer 16 are further suppressed.

### (C) Combination of tan δ in the SW and tan δ in the SW reinforcing layer

As described above, it was confirmed, in the examination stage before the completion of the present invention, that the temperature of the convex portion 66a was around 60°C and the temperature of the concave portion 66b was around 75°C on the surface of the SW8, when the temperature of the SW reinforcing layer 16 was around 100°C, and there was a large temperature difference between the SW reinforcing layer 16 and the convex portion 66a and the concave portion 66b on the surface of the SW8.

Therefore, in the present embodiment of the invention, it is set to satisfy the following relationships between 100°Ctan δ in the SW reinforcing layer 16, 60°Ctan δ in the convex portion 66a on the surface of SW8, and 75°Ctan δ in the concave portion 66b on the surface of SW8, so that the SW8 is efficiently cooled to suppress the temperature rise more effectively.

### (A) 60°Ctan δ and 75°Ctan δ

First, the difference between 60°Ctan δ and 75°Ctan δ of SW8 |60°Ctan δ-75°Ctan δ| is set to less than 0.05. This value is preferably 0.04 or less, more preferably 0.03 or less, and further more preferably 0.02 or less.

By setting |60°Ctan δ-75°Ctan δ| to less than 0.05, the durability during run-flat running can be improved. As the mechanism, it is speculated that the efficiencies of thermal conductivity and heat dissipation have been improved by reducing the difference between the value of 60°Ctan δ and the value of 75°Ctan δ, since a temperature difference is likely to occur between the convex portion 66a and the concave portion 66b in the prior art.

### (B) 100°Ctan δ of the SW reinforcing layer and 75°Ctan δ of the SW

In this embodiment of the invention, the 100°Ctan δ of the SW reinforcing layer is set to 0.06 or less. Then, the difference between 100°Ctan δ of the SW reinforcing layer 16 and 75°Ctan δ of SW 8 |100°Ctan δ of the SW reinforcing layer-75°Ctan δ of SW| is set to less than 0.1. This value is preferably 0.08 or less, more preferably 0.06 or less, and further more preferably 0.03 or less. This makes it possible to improve the durability during run-flat running. As the mechanism, it is speculated that the efficiencies of thermal conductivity and heat dissipation have been improved by reducing the difference between the value of 100°Ctan δ of the SW reinforcing layer 16 and the value of 75°Ctan δ of SW 8, since a temperature difference is likely to occur between the concave portion 66b of SW and the SW reinforcing layer 16 in the prior art.

### (C) 100°Ctan δ of SW reinforcing layer and 60°Ctan δ of SW

Next, 100°Ctan δ of the SW reinforcing layer 16 and 60°Ctan δ of the convex portion 66a of SW 8 |100°Ctan δ of SW reinforcing layer-60°Ctan δ of SW| is less than 0.15. This value is preferably 0.12 or less, more preferably 0.09 or less, and further more preferably 0.05 or less. This makes it possible to improve the durability during run-flat running. As the mechanism,
it is speculated that the efficiencies of thermal conductivity and heat dissipation have been improved by reducing the difference between the value of 100°Ctan δ of the SW reinforcing layer 16 and the value of 60°Ctan δ of SW 8, since a temperature difference is likely to occur between the convex portion 66a of SW and the SW reinforcing layer 16 in the prior art.

### (D) Combination of each tan δ

It is not necessary to satisfy all of the relationships between the 100°Ctan δ of the SW reinforcing layer 16 and the 60°Ctan δ and the 75°Ctan δ of SW 8, shown in (A) to (C) above. However, when all of them are satisfied, the heat generated in the SW reinforcing layer 16 is effectively dissipated through both the convex portion 66a and the concave portion 66b, so that the heat dissipation function is further improved.

### (3) Rubber composition constituting SW and SW reinforcing layer

In the present embodiment of the invention, the SW and SW reinforcing layer 16 having the above characteristics are formed by a rubber composition containing rubber components such as natural rubber (NR) and butadiene rubber (BR). As another form, it may be a resin composition.

The NR is not particularly limited, and those normally used in the rubber industry can be used. Specific examples thereof include RSS # 3 and TSR20.

The content of NR in the rubber component is preferably 20% by mass or more because it has excellent breaking strength and workability, so that the sheet processing of the reinforcing rubber layer is easy and no holes, bits, or dispersion defects occur. The content is more preferably 25% by mass or more, and 30% by mass or more is further preferable. Further, the content of NR in the rubber component is preferably 70% by mass or less, more preferably 65% by mass or less, and further more preferably 60% by mass or less from the viewpoint of excellent crack growth resistance and improving hardness.

Examples of the BR include ordinary BR, butadiene rubber having a high cis content (HISIS BR), modified butadiene rubber (modified BR), and butadiene rubber containing 1,2- syndiotactic polybutadiene crystals (SPB-containing BR).

The content of BR in the diene-based rubber component is preferably 20% by mass or more, more preferably 30% by mass or more, further more preferably 40% by mass or more, from the viewpoint of improving crack resistance. Further, the content of BR in the diene-based rubber component is preferably 85% by mass or less, more preferably 80% by mass or less, further more preferably 70 mass% or less from the viewpoints that zinc oxide can be sufficiently dispersed, the flatness of the sheet fabric is excellent, and the non-perforated property is excellent.

The high cis BR means a BR having a cis 1,4-bond content of 90% or more with respect to the butadiene portion of the obtained rubber.

As the HISIS BR, a commercially available HISIS BR can be used. For example, a BR (HISIS BR) having a HISIS content such as BR130B and BR150B manufactured by Ube Industries, Ltd. can be preferably used.

The SPB-containing BR, in which a 1,2-syndiotactic polybutadiene crystal is not simply dispersed in BR, but is dispersed after being chemically bonded to BR, is preferred. When the crystals are chemically bonded to the rubber component and then dispersed, the generation and propagation of cracks tend to be suppressed.

Further, since the 1,2-syndiotactic polybutadiene crystal contained in BR has sufficient hardness, a sufficient complex elastic modulus can be obtained even if the crosslink density is low.

The melting point of the 1,2-syndiotactic polybutadiene crystal is preferably 180°C or higher, more preferably 190°C or higher. If the melting point is less than 180°C, the crystals tend to melt during vulcanization of the tire in the press and the hardness tends to decrease. The melting point of the 1,2-syndiotactic polybutadiene crystal is preferably 220°C or lower, more preferably 210°C or lower. When the melting point exceeds 220°C, the molecular weight of BR increases, so that the dispersibility in the rubber composition tends to deteriorate.

In the SPB-containing BR, the content of the boiling n-hexane insoluble matter is preferably 2.5% by mass or more, and more preferably 8% by mass or more. If the content is less than 2.5% by mass, the rubber composition tends not to have sufficient hardness. The content of the boiling n-hexane insoluble matter is preferably 22% by mass or less, more preferably 20% by mass or less, and further more preferably 18% by mass or less. When the content exceeds 22% by mass, the viscosity of BR itself is high, and the dispersibility of BR and the filler in the rubber composition tends to deteriorate. Here, the boiling n-hexane insoluble matter refers to 1,2-syndiotactic polybutadiene in the SPB-containing BR.

In the SPB-containing BR, the content of 1,2-syndiotactic polybutadiene crystals is preferably 2.5% by mass or more, more preferably 10% by mass or more. If the content is less than 2.5% by mass, the hardness may be insufficient. In addition, the content of 1,2-syndiotactic polybutadiene crystals in BR is preferably 20% by mass or less, more preferably 18% by mass or less. If the content exceeds 20% by mass, BR is difficult to disperse in the rubber composition, and workability may be deteriorated.

Further, in order to improve the hardness (Hs), reversion property and weather resistance of the rubber composition, as a diene-based rubber component, styrene-butadiene rubber (SBR), butyl rubber (IIR) or ethylenepropylene-diene terpolymer rubber (EPDM) may be added further.

When SBR, IIR or EPDM is contained, the content thereof is preferably 10 % by mass or more, more preferably 15% by mass or more, further more preferably 20% by mass or more with respect to 100 parts by mass of the diene rubber from the viewpoint that the effects of hardness (Hs), reversion property and weather resistance of the rubber composition are exhibited. Further, the content of SBR, IIR or EPDM is preferably 40% by mass or less, more preferably 35% by mass or less, and further more preferably 30% by mass or less with respect to 100 parts by mass of the diene rubber, from the viewpoint of excellent breaking strength and workability.

The rubber composition for SW and the SW reinforcing layer contains, for example, silica or carbon black as a reinforcing filler.

The content of carbon black is preferably 5 parts by mass or more, more preferably 7 parts by mass or more, further more preferably 15 parts by mass or more with respect to 100 parts by mass of the diene rubber component, from the viewpoints that sufficient hardness can be obtained and weather resistance such as ultraviolet absorption and ozone absorption is excellent. Further, the content of carbon black is preferably 90 parts by mass or less, more preferably 80 parts by mass or less, further more preferably 70 parts by mass or less with respect to 100 parts by mass of the diene rubber component, from the viewpoint of obtaining sufficient breaking strength and being excellent in low heat generation.

The nitrogen adsorption specific surface area (N₂SA) of carbon black is preferably 25 to 200 m²/g. As the carbon black, for example, carbon blacks such as N220, N330, N351, N550 and N660 can be used.

The silica is not particularly limited. Examples thereof include dry silica (silicic anhydride) and wet silica (silicic anhydride), and wet silica is preferable because it has a large number of silanol groups.

When silica is contained, the content thereof is preferably 5 parts by mass or more, more preferably 7 parts by mass or more, further more preferably 9 parts by mass or more with respect to 100 parts by mass of the diene rubber component from the viewpoint of improving breaking strength and low heat generation. Further, the silica content is preferably 90 parts by mass or less, more preferably 80 parts by mass or less, further more preferably 70 parts by mass or less with respect to 100 parts by mass of the diene rubber component, from the viewpoint that sufficient breaking strength can be obtained and excellent in low heat generation.

The N₂SA of silica is preferably 40 m²/g or more, more preferably 45 m²/g or more from the view point that the breaking strength of the rubber composition is improved. Further, N₂SA of silica is preferably 250 m²/g or less, more preferably 200 m²/g or less from the view point of improving low heat generation.

Generally, when silica is further used as the filler, a silane coupling agent is blended together with silica. As the silane coupling agent, ordinary ones can be used.

In addition to the rubber component and the reinforcing filler such as silica and carbon black, the rubber composition for SW and the rubber composition for the SW reinforcing layer according to the present embodiment of the invention may contain formulations generally used in the production of rubber compositions, such as zinc oxide, anti-aging agents, fatty acids, oils, sulfur, vulcanization accelerators, organic cross-linking agents and the like, as needed in commonly used amounts.

Conventionally known zinc oxide can be used. For example, products manufactured by Mitsui Metal Mining Co., Ltd., Toho Zinc Co., Ltd., HakusuiTech Co., Ltd., Shodo Chemical Industry Co., Ltd., Sakai Chemical Industry Co., Ltd., etc. can be used.

The content of zinc oxide is preferably 0.5 parts by mass or more, and more preferably 1 part by mass or more with respect to 100 parts by mass of the rubber component. Further, the content is preferably 20 parts by mass or less, more preferably 10 parts by mass or less.

The anti-aging agent is not particularly limited. Examples thereof include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agents such as N-isopropylN'-phenyl-p-phenylenediamine, N-(1,3-dimethylbutyl) -N'-phenyl-p-phenylenediamine, and N, N'-di-2-naphthyl-p-phenylenediamine; quinoline-based anti-aging agents such as polymers of 2,2,4-trimethyl-1,2-dihydroquinolin; monophenol based anti-aging agents such as 2,6-di-t-butyl-4 - methylphenol and styrenated phenol; bis, tris and polyphenolic anti-aging agents such as tetrakis-[methylene-3-(3', 5'-di-t-butyl-4'-hydroxyphenyl) propionate] methane; and the like. As commercially available products, products manufactured by Seiko Chemical Co., Ltd., Sumitomo Chemical Co., Ltd., Ouchi Shinko Chemical Industry Co., Ltd., Flexis Co., Ltd., etc. can be used. These may be used alone or in combination of two or more.

The content of the anti-aging agent is preferably 0.3 parts by mass or more, and more preferably 1 part by mass or more with respect to 100 parts by mass of the rubber component. Further, the content is preferably 20 parts by mass or less, more preferably 15 parts by mass or less, and further preferably 10 parts by mass or less.

As the fatty acid, stearic acid can be used. For example, products manufactured by NOF Corporation, Kao Corporation, Fujifilm Wako Pure Chemical Industries, Ltd., Chiba Fatty Acid Co., Ltd., etc. can be used.

The content of the fatty acid is preferably 0.5 parts by mass or more, and more preferably 1 part by mass or more with respect to 100 parts by mass of the rubber component. Further, the content is preferably 20 parts by mass or less, more preferably 10 parts by mass or less.

Examples of the oil include process oils such as paraffin-based, aroma-based, and naphthenic-based process oils.

Examples of sulfur (sulfur vulcanizing agent) include powdered sulfur, precipitated sulfur, colloidal sulfur, insoluble sulfur, highly dispersible sulfur, and soluble sulfur, which are generally used in the rubber industry. As commercially available products, products manufactured by Tsurumi Chemical Industry Co., Ltd., Karuizawa Sulfur Co., Ltd., Shikoku Chemicals Corporation, Flexis Co., Ltd., Nippon Kanryu Industry Co., Ltd., Hosoi Chemical Industry Co., Ltd., etc. can be used. These may be used alone or in combination of two or more.

The content of the sulfur (sulfur vulcanizer) with respect to 100 parts by mass of the rubber component is preferably 0.3 parts by mass or more, more preferably 0.5 parts by mass or more, and further more preferably 1.0 part by mass or more. Further, the content is preferably 20 parts by mass or less, more preferably 10 parts by mass or less.

### fenamide;

Examples of the vulcanization accelerator include thiazole-based vulcanization accelerators such as 2-mercaptobenzothiazole, di-2-benzothiazolyl disulfide (DM (2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzyltiuram disulfide (TBzTD), and tetrakis(2-ethylhexyl) thiuram disulfide (TOT-N); sulfenamide-based vulcanization accelerators such as N-cyclohexyl-2-benzothiazolesulfenamide, N-t-butyl-2-benzothiazolylsulfenamide, N-oxyethylene-2-benzothiazolesulfenamide, N-oxyethylene-2-benzothiazolesulfenamide amide, and N, N'-diisopropyl-2-benzothiazolesulfenamide; and guanidine-based vulcanization accelerators such as diphenylguanidine, dioltotrilguanidine, and orthotrilbiguanidine. These may be used alone or in combination of two or more.

The content of the vulcanization accelerator is preferably 0.5 part by mass or more, more preferably 1.0 part by mass or more, with respect to 100 parts by mass of the rubber component from the viewpoint of vulcanization characteristics and the like. Further, the content is preferably 20 parts by mass or less, more preferably 10 parts by mass or less.

The rubber composition for the SW reinforcing layer according to the present embodiment of the invention has physical properties where a breaking strength TB (MPa) × breaking elongation EB(%) at 100°C is 320 or more, and a loss tangent at 100°C, 100°Ctan δ, is 0.06 or less. In order to achieve these physical properties, it is preferable to add an organic cross-linking agent. Known organic cross-linking agents can be used, and are preferably used in the range of 0.1 part by mass or more and 20 parts by mass or less. As a result, the value of tan δ can be reduced while improving the value of the product of TB and EB. Further, the value of tan δ can be reduced by reducing the amount of the filler in the rubber composition for the SW reinforcing layer and the rubber composition for SW, or by increasing the particle size of the filler. Further, by blending a large amount of rubber having a low glass transition temperature (for example, BR), the glass transition temperature of the entire rubber composition can be shifted to the low temperature side, and the fluctuation of the tan δ value in the high temperature region can be reduced.

### 2 . Other configurations

Next, other configurations according to the run-flat tire of the present invention will be described.

The tread 4 has a shape that is convex outward in the radial direction. The tread 4 forms a tread surface 26 that is in contact with the road surface. A groove 28 is carved on the tread surface 26. A tread pattern is formed by the groove 28. In the present embodiment of the invention, four grooves 28, which are generally called main grooves, are formed in the circumferential direction. The tread 4 has a cap layer 30 and a base layer 32. For example, each layer is made of crosslinked rubber. The cap layer 30 is located on the outer side in the radial direction of the base layer 32. The cap layer 30 is laminated on the base layer 32. Eq is the equatorial plane.

The sidewall 8 extends substantially inward in the radial direction from the end of the tread 4. For example, the sidewall 8 is made of crosslinked rubber. The sidewall 8 prevents trauma to the carcass 14. The sidewall 8 includes ribs 34. The rib 34 projects outward in the axial direction.

The clinch portion 10 is located substantially inside the sidewall 8 in the radial direction. The clinch portion 10 is located outside the bead 12 and the carcass 14 in the axial direction. The clinch portion 10 is in contact with the flange 36 of the rim.

The bead 12 is located inside the sidewall 8 in the radial direction. The bead 12 includes a core 38 and an apex 40 extending radially outward from the core 38. The core 38 is ring-shaped and includes a wound non-stretchable wire (typically a steel wire). Apex 40 is tapered outward in the radial direction. For example, apex 40 is made of a high hardness crosslinked rubber.

In Fig. 1, the arrow Ha indicates the height of the apex 40 from the reference line BL. This reference line BL passes through the innermost point in the radial direction of the core 38. This reference line BL extends in the axial direction. The ratio of the height Ha of the apex 40 to the height H of the tire 2 (Ha/H) is preferably 0.1 or more and 0.7 or less. The apex 40 having a ratio (Ha / H) of 0.1 or more can support the vehicle weight in a punctured state. The apex 40 contributes to the durability of the tire 2 in a punctured state. From this viewpoint, the ratio (Ha / H) is more preferably 0.2 or more. The tire 2 having a ratio (Ha / H) of 0.7 or less is excellent in riding comfort. From this viewpoint, the ratio (Ha / H) is more preferably 0.6 or less.

The carcass 14 is composed of a carcass ply 42. The carcass ply 42 is bridged between the beads 12 on both sides and runs along the tread 4 and the sidewall 8. The carcass ply 42 is folded around the core 38 from the inside to the outside in the axial direction. As a result of this folding, the carcass ply 42 is formed with a main portion 44 and a folded portion 46. The end 48 of the folded portion 46 reaches directly below the belt 18. In other words, the folded portion 46 overlaps the belt 18. The carcass 14 has a so-called "ultra-high turn-up structure". The carcass 14 having an ultra-high turn-up structure contributes to the durability of the tire 2 in a punctured state. The carcass 14 contributes to durability in a punctured state.

The carcass ply 42 is composed of a large number of parallel cords and a topping rubber. The absolute value of the angle each code makes with respect to the equatorial plane is 45° to 90°, and further 75° to 90°. In other words, the carcass 14 has a radial structure. The cord consists of organic fibers. Examples of the preferred organic fibers include polyester fibers, nylon fibers, rayon fibers, polyethylene naphthalate fibers and aramid fibers.

The portion of the carcass 14 that overlaps the SW reinforcing layer 16 is separated from the inner liner 22. In other words, the carcass 14 is curved due to the presence of the SW reinforcing layer 16. In the punctured state, a compressive load is applied to the SW reinforcing layer 16, and a tensile load is applied to the region of the carcass 14 that is close to the SW reinforcing layer 16. Since the SW reinforcing layer 16 is a rubber block, it can sufficiently withstand the compressive load. The cord of the carcass 14 can sufficiently withstand a tensile load. The SW reinforcing layer 16 and the carcass cord suppress the vertical bending of the tire 2 in a punctured state. The tire 2 in which the vertical bending is suppressed is excellent in steering stability in a punctured state.

From the viewpoint of suppressing vertical strain in a punctured state, the hardness of the SW reinforcing layer 16 is preferably 60 or more, more preferably 65 or more. From the viewpoint of riding comfort in a normal state (a state in which a normal internal pressure is applied to the tire 2), the hardness is preferably 90 or less, more preferably 80 or less. The hardness is measured by a type A durometer according to the provisions of "JIS K6253". This durometer is pressed against the cross section shown in Fig. 1 and the hardness is measured. The measurement is made at a temperature of 23°C.

The lower end 50 of the SW reinforcing layer 16 is located inside the upper end 52 of the apex 40 in the radial direction. In other words, the SW reinforcing layer 16 overlaps with the apex 40. In Fig. 1, the arrow L1 indicates the radial distance between the lower end 50 of the SW reinforcing layer 16 and the upper end 52 of the apex 40. The distance L1 is preferably 5mm or more and 50mm or less. In the tire 2 in which the distance L1 is in this range, a uniform rigidity distribution can be obtained. The distance L1 is more preferably 10mm or more. The distance L1 is more preferably 40mm or less.

The upper end 54 of the SW reinforcing layer 16 is located inward in the axial direction with respect to the end 56 of the belt 18. In other words, the SW reinforcing layer 16 overlaps with the belt 18. In Fig. 1, the arrow L2 indicates the axial distance between the upper end 54 of the SW reinforcing layer 16 and the end 56 of the belt 18. The distance L2 is preferably 2mm or more and 50mm or less. In the tire 2 in which the distance L2 is in this range, a uniform rigidity distribution can be obtained. The distance L2 is more preferably 5mm or more. The distance L2 is more preferably 40mm or less.

The shape of the SW reinforcing layer 16 is not particularly limited. For example, it is tapered inward and tapered outward in the radial direction, and has a shape similar to that of a crescent moon.

From the viewpoint of suppressing vertical strain in a punctured state, the maximum thickness of the SW reinforcing layer 16 is preferably 3mm or more, more preferably 4mm or more, and particularly preferably 7mm or more. From the viewpoint of the light weight of the tire 2, the maximum thickness is preferably 25mm or less, more preferably 20mm or less.

The belt 18 is located on the outer side in the radial direction of the carcass 14. The belt 18 is laminated with the carcass 14. The belt 18 reinforces the carcass 14. The belt 18 is composed of an inner layer 58 and an outer layer 60. As is clear from Fig. 1, the width of the inner layer 58 is slightly larger than the width of the outer layer 60. Although not shown, each of the inner layer 58 and the outer layer 60 consists of a number of parallel cords and topping rubbers. Each cord is inclined with respect to the equatorial plane. The absolute value of the tilt angle is usually 10° or more and 35° or less. The direction of inclination of the cord of the inner layer 58 with respect to the equatorial plane is opposite to the direction of inclination of the cord of the outer layer 60 with respect to the equatorial plane. The preferred material for the cord is steel. Organic fibers may also be used for the cord. The axial width of the belt 18 is preferably 0.85 times or more and 1.0 times or less the maximum width of the tire 2. The belt 18 may include three or more layers.

The band 20 covers the belt 18. Although not shown, the band 20 comprises a cord and a topping rubber. The cord is wound in a spiral. The band 20 has a so-called jointless structure. The cord extends substantially in the circumferential direction. The angle of the cord with respect to the circumferential direction is 5° or less, and further 2° or less. Since the belt 18 is restrained by this cord, the lifting of the belt 18 is suppressed. The cord is made of organic fibers. Examples of the preferred organic fibers include nylon fibers, polyester fibers, rayon fibers, polyethylene naphthalate fibers and aramid fibers.

Instead of the band 20, the tire 2 may include an edge band that covers only the vicinity of the end of the belt 18. The tire 2 may include an edge band together with the band 20.

The inner liner 22 is made of crosslinked rubber. Rubber having excellent air shielding properties is used for the inner liner 22. The inner liner 22 holds the internal pressure of the tire 2. The inner liner 22 is located inside the SW reinforcing layer 16 in the axial direction. The inner liner 22 may be sandwiched between the carcass 14 and the SW reinforcing layer 16.

The run-flat tire constructed as described above is manufactured by a usual method. That is, an unvulcanized tire is formed by forming each member (tread, sidewall, sidewall reinforcing layer, etc.) with a rubber composition and molding it on a tire molding machine by a usual method, and a run-flat tire can be obtained, by heating and pressurizing the unvulcanized tire in a vulcanizer at, for example, 5 minutes to 15 minutes at 120°C to 160°C.

### [EXAMPLES]

Hereinafter, the present invention will be described in more detail based on Examples.

### [1] Experiment 1

In Experiment 1, the effect of improving the run-flat running performance by suppressing the temperature rise during the run-flat running when the uneven portion was formed on the surface of the SW was investigated. A plurality of types of rubber compositions were prepared for the SW reinforcing layer and for the SW. The materials used are shown below.

### 1. Material name

NR: TSR20
BR: Nipol 1250H, manufactured by Nippon Zeon Co., Ltd.
CB1: N550, manufactured by Cabot Japan Co., Ltd.
CB2: N220, manufactured by Cabot Japan Co., Ltd.
CB3: Seast V, manufactured by Tokai Carbon Co., Ltd.
ZnO: Zinc oxide No. 1, manufactured by Mitsui Metal Mining Co., Ltd. Stearic acid: manufactured by Nippon Oil & Fat Co., Ltd.
Oil: Diana Process AH-24, manufactured by Idemitsu Kosan Co., Ltd.
Anti-aging agent: Nocrack 6C, manufactured by Ouchi Shinko Chemical Industry Co., Ltd.
Sulfur: Seimisulfer (insoluble sulfur containing 60% or more of insoluble matter due to carbon disulfide and 10% by mass of oil), manufactured by Nippon Kanryu Industry Co., Ltd.
Vulcanization accelerator CBS: Noxeller CZ (Chemical name: N-cyclohexyl-2-benzothiazylsulfenamide), manufactured by Ouchi Shinko Chemical Industry Co., Ltd.
Organic cross-linking agent: Tuckyroll V200, phenolic resin cross-linking agent, manufactured by Taoka Chemical Industry Co., Ltd.

The compounding ratios of the rubber composition for the SW reinforcing layer and the rubber composition for SW are shown in Tables 1 and 2, respectively.

**[Table 1]**

| Rubber composition No. | | R-1 |
|---|---|---|
| Rubber composition | NR | 30 |
| | BR | 70 |
| | CB1 | 65 |
| | ZnO | 7 |
| | Stearic acid | 3 |
| | Oil | 2 |
| | Sulfur | 9 |
| | Vulcanization accelerator | 3 |
| | Organic cross-linking agent | 0.1 |

**[Table 2]**

| Rubber composition No. | | S-1 |
|---|---|---|
| Rubber composition | NR | 40 |
| | BR | 60 |
| | CB2 | 20 |
| | CB3 | 20 |
| | ZnO | 3 |
| | Stearic acid | 2.5 |
| | Oil | 5 |
| | Anti-aging agent | 2 |
| | Sulfur | 2 |
| | Vulcanization accelerator | 1 |

### 2. Preparation of run-flat tires

Rubber compositions R-1 and S-1 prepared based on Tables 1 and 2, respectively, are used as the rubber compositions for SW reinforcing layer and for SW, and are combined with other members (tread, etc.) to produce an unvulcanized tire. Then, vulcanization for the unvulcanized tire was performed to produce a run-flat tire (tire size 245/40R18). A tire in which the uneven portion 66 is not formed on the surface portion of the SW8 and two types of tires in which the uneven portion 66 is formed but the height h, width w, and pitch p of the convex portion 66a are different from each other were prepared.

### 3. Evaluation

### (1) Tensile test

For the rubber composition for the SW reinforcing layer, a tensile test was carried out at 100°C by using a No. 3 dumbbell type test piece made of vulcanized rubber according to JIS K6251 "vulcanized rubber and thermoplastic rubber-How to determine tensile properties", and the elongation at break (tensile elongation; EB (%)) and the tensile strength at break (tensile breaking strength; TB (MPa)) of the test piece were measured. TB × EB was calculated from the measurement results. The test piece can be extracted from the SW reinforcing layer of the tire. The test results are shown in Table 3.

### (2) Viscoelasticity test

Targeting the rubber composition for SW reinforcing layer and the rubber composition for SW, the loss tangent tan δ was measured under the conditions of initial strain of 10%, dynamic strain of 2%, and frequency of 10 Hz using a viscoelastic spectrometer manufactured by Iwamoto Seisakusho Co., Ltd. at 100°C for the rubber composition for SW reinforcing layer and at 60°C and 75°C for the rubber composition for SW. The test piece for measurement can be extracted from the SW reinforcing layer and SW of the tire, respectively. The test results are shown in Table 4.

### (3) Run-flat running test

Each test tire is rim-assembled on the rim (18 × 8.5JJ) from which the valve core has been removed, and was run on the drum tester in the deflated state under the conditions of the speed (80km/h), vertical load (4.14kN: 65% of the normal load) and room temperature (38 ± 2°C), until the tires were destroyed. The test results are shown in Table 5. The result was shown by an index (run-flat running performance index) with Comparative Example 1 as 100. The larger the value, the better the durability performance.

**[Table 3]**

| Rubber composition No. | | R-1 |
|---|---|---|
| Physical characteristics | 100°C TB (MPa) | 5.0 |
| | 100°C EB (%) | 64 |
| | 100°C TB × EB | 320 |
| | 100°C tan δ | 0.06 |

**[Table 4]**

| Rubber composition No. | | S-1 |
|---|---|---|
| Physical characteristics | 60°C tan δ | 0.17 |
| | 75°C tan δ | 0.13 |

**[Table 5]**

| | | Comparative example 1 | Example 1 | Example 2 |
|---|---|---|---|---|
| Uneven portion | h (mm) | - | 0.3 | 2.5 |
| | w (mm) | | 1 | 8 |
| | p (mm) | | 6 | 35 |
| Run-flat running performance index | | 100 | 105 | 108 |

It was confirmed that Examples 1 and 2 in which the uneven portions were formed had a larger run-flat index than Comparative Example 1 as shown in Table 5. This is because the uneven portion was formed on the surface of the SW, and the SW reinforcing layer was formed of a rubber composition having a large 100°CTB × EB. In addition, this is the result of a combination that the 100°Ctan δ of the SW reinforcing layer was reduced to 0.06, the 60°Ctan δ of the SW was reduced to 0.17 and further |60°Ctan δ-75°Ctan δ| of the SW was reduced to 0.04.

### [2] Experiment 2

Next, the relationship between various SW reinforcing layers and SW and run-flat running durability were investigated. For the purpose, the rubber composition for the SW reinforcing layer shown in Table 6 and the rubber composition for SW shown in Table 7 were prepared. Using these, the rubber composition for the SW reinforcing layer was fixed, and the rubber composition for SW was changed in the Examples, as shown in Table 8. The run-flat tire was manufactured according to Experiment 1, and, of the convex portion on the surface of the SW, the height h was 1 mm, the width w was 4 mm, and the pitch p was 15 mm. In Table 8, the run-flat running durability performance is shown by an index based on Comparative Example 2.

**[Table 6]**

| Rubber composition No. | | R-2 | R-3 | R-4 | R-5 | R-6 | R-7 |
|---|---|---|---|---|---|---|---|
| Rubber composition | NR | 30 | 30 | 30 | 30 | 40 | 50 |
| | BR | 70 | 70 | 70 | 70 | 60 | 50 |
| | CB1 | 70 | 65 | 60 | 50 | 45 | 40 |
| | ZnO | 7 | 7 | 7 | 7 | 7 | 7 |
| | Stearic acid | 3 | 3 | 3 | 3 | 3 | 3 |
| | Oil | 2 | 2 | 2 | 2 | 2 | 2 |
| | Sulfur | 7 | 7 | 7 | 7 | 7 | 7 |
| | Vulcanization accelerator | 2 | 2 | 2 | 2 | 2 | 2 |
| | Organic cross-linking agent | - | - | 0.2 | 1 | 3 | 5 |
| | | | | | | | |
| Physical characterristics | 100°CTB(MPa) | 5.0 | 5.7 | 6.3 | 7.7 | 9.1 | 11.1 |
| | 100°C EB (%) | 58 | 70 | 78 | 91 | 113 | 175 |
| | 100°CTB × EB | 290 | 399 | 491 | 701 | 1028 | 1943 |
| | 100°C tan δ | 0.10 | 0.08 | 0.06 | 0.04 | 0.03 | 0.03 |

**[Table 7]**

| Rubber composition No. | | S-2 | S-3 | S-4 | S-5 | S-6 | S-7 | S-8 |
|---|---|---|---|---|---|---|---|---|
| Rubber composition | NR | 60 | 40 | 30 | 20 | 20 | 20 | 20 |
| | BR | 40 | 60 | 70 | 80 | 80 | 80 | 80 |
| | CB2 | 45 | 15 | 15 | 15 | 15 | 15 | 15 |
| | CB3 | - | 30 | 30 | 30 | 30 | 30 | 30 |
| | ZnO | 3 | 3 | 3 | 3 | 3 | 3 | 5 |
| | Stearic acid | 2.5 | 2.5 | 2.5 | 2.5 | 2.5 | 2.5 | 2.5 |
| | Oil | 5 | 5 | 5 | 5 | 5 | 5 | 5 |
| | Anti-aging agent | 2 | 2 | 2 | 2 | 2 | 2 | 2 |
| | Sulfur | 2 | 2 | 2 | 2 | 3 | 4 | 7 |
| | Vulcanization accelerator | 1 | 1 | 1 | 1 | 1 | 1 | 1 |
| | | | | | | | | |
| Physical characterristics | 70°C tan δ | 0.19 | 0.16 | 0.15 | 0.12 | 0.10 | 0.08 | 0.05 |
| | 60°C tan δ | 0.14 | 0.14 | 0.11 | 0.09 | 0.07 | 0.06 | 0.04 |

**[Table 8]**

| | Comparative example 2 | Example 3 | Example 4 | Example 5 | Example 6 |
|---|---|---|---|---|---|
| Rubber composition for SW reinforcing layer | R-7 | R-6 | R-6 | R-6 | R-6 |
| Rubber composition for SW | S-2 | S-4 | S-5 | S-7 | S-8 |
| \|60°Ctan δ-75°Ctan δl | 0.05 | 0.04 | 0.03 | 0.02 | 0.01 |
| Run-flat running performance index | 100 | 111 | 116 | 127 | 136 |

From Table 8, it can be seen that the run-flat running performance is high when | 60°Ctan δ-75°Ctan δ| of SW is set to less than 0.05.

### [3] Experiment 3

Next, using the rubber composition for the SW reinforcing layer shown in Table 6 and the rubber composition for SW shown in Table 7, the rubber composition for SW was fixed and the rubber composition for the SW reinforcing layer was changed in the examples, as shown in Table 9. The run-flat tire was manufactured according to Experiments 1 and 2, and, of the convex portion on the surface of the SW, the height h was 1.5 mm, the width w was 3 mm, and the pitch p was 20 mm. In Table 9, the run-flat running durability performance is shown by an index based on Comparative Example 3.

**[Table 9]**

| | Comparative example 3 | Exam -ple 7 | Exam -ple 8 | Exam ple 9 | Exam ple 10 | Exam ple 11 |
|---|---|---|---|---|---|---|
| Rubber composition for SW reinforcing layer | R-5 | R-1 | R-3 | R-4 | R-5 | R-7 |
| Rubber composition for SW | S-2 | S-8 | S-8 | S-8 | S-8 | S-8 |
| \|100°Ctan δ of SW reinforcing layer-60°Ctan δ of SW\| | 0.15 | 0.01 | 0.03 | 0.01 | 0.01 | 0.02 |
| Run-flat running performance index | 100 | 108 | 113 | 118 | 125 | 142 |

From Table 9, it can be seen that the run-flat running performance is high when |100°Ctan δ of SW reinforcing layer-60°Ctan δ of SW| is less than 0.15.

### [3] Experiment 4

Next, using the rubber composition for the SW reinforcing layer shown in Table 6 and the rubber composition for SW shown in Table 7, both the rubber composition for SW and the rubber composition for the SW reinforcing layer were changed in the Examples, as shown in Table 10. The run-flat tire was manufactured according to Experiments 1 to 3, and, of the convex portion on the surface of the SW, the height h was 2 mm, the width w was 4 mm, and the pitch p was 25 mm. In Table 10, the run-flat running durability performance is shown by an index based on Comparative Example 4.

**[Table 10]**

| | Comparative example 4 | Exam -ple 12 | Exam -ple 13 | Exam ple 14 | Exam ple 15 | Exam ple 16 |
|---|---|---|---|---|---|---|
| Rubber composition for SW reinforcing layer | R-6 | R-3 | R-4 | R-5 | R-6 | R-7 |
| Rubber composition for SW | S-2 | S-3 | S-4 | S-5 | S-6 | S-7 |
| \|100°Ctan δ of SW reinforcing layer-75°Ctan δ of SW\| | 0.11 | 0.06 | 0.05 | 0.05 | 0.04 | 0.03 |
| Run-flat running performance index | 100 | 105 | 108 | 112 | 119 | 124 |

From Table 10, it can be seen that the run-flat running performance is high when |100°Ctan δ of SW reinforcing layer-75°Ctan δ of SW| is less than 0.1.

Although the present invention has been described above based on the embodiments, the present invention is not limited to the above embodiments, but can be modified within the scope of the appended claims.

### [DESCRIPTION OF THE REFERENCE NUMERALS]

- 2: tire
- 4: tread
- 6: wings
- 8: sidewall (SW)
- 10: clinch portion
- 12: bead
- 14: carcass
- 16: SW reinforcing layer
- 18: belt
- 20: band
- 22: inner liner
- 24: chafer
- 26: tread surface
- 28: groove
- 30: cap layer
- 32: base layer
- 34: rib
- 36: flange
- 38: core
- 40: apex
- 42: carcass ply
- 44: main portion
- 46: folded portion
- 48: end of folded portion
- 50: lower end of SW reinforcing layer
- 52: upper end of apex
- 54: upper end of SW reinforcing layer
- 56: end of belt
- 58: inner layer
- 60: outer layer
- 66: uneven portion
- 66a: convex portion
- 66b: concave portion
- h: height of convex portion
- w: width of convex portion
- p: pitch of convex portion
- Eq: equatorial plane
- BL: reference line
- Ha: height of apex from reference line BL
- H: tire height
- L1, L2: distance

## Claims

1. A run-flat tire (2) provided with a sidewall reinforcing layer (16) inside the sidewall (8), which has an uneven portion (66) on the surface portion of the sidewall (8),
**characterized in that**
the sidewall reinforcing layer (16) has the breaking strength TB (MPa) × break elongation EB (%) of 320 or more at 100°C, and the loss tangent at 100°C, 100°Ctan δ, of 0.06 or less; and
the sidewall (8) has a loss tangent at 60°C, 60°Ctan δ, of 0.17 or less, and has the difference between the loss tangent at 60°C and the loss tangent at 75°C, |60°Ctan δ-75°Ctan δ | , of less than 0.05.

2. A run-flat tire (2) provided with a sidewall reinforcing layer (16) inside the sidewall (8), which has an uneven portion (66) on the surface portion of the sidewall (8),
**characterized in that**
the sidewall reinforcing layer (16) has the breaking strength TB (MPa) × break elongation EB (%) of 320 or more at 100°C, and the loss tangent at 100°C, 100°Ctan δ, of 0.06 or less;
the sidewall (8) has a loss tangent at 60°C, 60°Ctan δ, of 0.17 or less; and
the difference between the loss tangent of the sidewall reinforcing layer (16) at 100°C and the loss tangent of the sidewall (8) at 75°C,
|100°Ctan δ-75°Ctan δ|, is less than 0.1.

3. A run-flat tire (2) provided with a sidewall reinforcing layer (16) inside the sidewall (8), which has an uneven portion (66) on the surface portion of the sidewall (8),
**characterized in that**
the sidewall reinforcing layer (16) has the breaking strength TB (MPa) × break elongation EB (%) of 320 or more at 100°C, and the loss tangent at 100°C, 100°Ctan δ, of 0.06 or less; and
the sidewall (8) has a loss tangent at 60°C, 60°Ctan δ, of 0.17 or less; and
the difference between the loss tangent of the sidewall reinforcing layer (16) at 100°C and the loss tangent of the sidewall (8) at 60°C,
|100°Ctan δ-60°Ctan δ| is less than 0.15.

4. The run-flat tire (2) according to claim 1 or claim 3, wherein
the difference between the loss tangent of the sidewall reinforcing layer (16) at 100°C and the loss tangent of the sidewall (8) at 75°C,
|100°Ctan δ-75°Ctan δ|, is less than 0.1.

5. The run-flat tire (2) according to claim 1 or claim 2, wherein
the difference between the loss tangent of the sidewall reinforcing layer (16) at 100°C and the loss tangent of the sidewall (8) at 60°C,
|100°Ctan δ-60°Ctan δ| is less than 0.15.

6. The run-flat tire (2) according to claim 1, wherein
the difference between the loss tangent of the sidewall reinforcing layer (16) at 100°C and the loss tangent of the sidewall (8) at 75°C,
|100°Ctan δ-75°Ctan δ|, is less than 0.1; and
the difference between the loss tangent of the sidewall reinforcing layer (16) at 100°C and the loss tangent of the sidewall (8) at 60°C,
|100°Ctan δ-60°Ctan δ| is less than 0.15.

7. The run-flat tire (2) according to any one of claims 1-6, wherein
the sidewall reinforcing layer (16) has the breaking strength TB (MPa) × break elongation EB (%) of 350 or more at 100°C.

8. The run-flat tire (2) according to claim 7, wherein
the sidewall reinforcing layer (16) has the breaking strength TB (MPa) × break elongation EB (%) of 400 or more at 100°C.

9. The run-flat tire (2) according to claim 8, wherein
the sidewall reinforcing layer (16) has the breaking strength TB (MPa) × break elongation EB (%) of 700 or more at 100°C.

10. The run-flat tire (2) according to any one of claims 1-9, wherein
the sidewall reinforcing layer (16) has 100°Ctan δ of 0.055 or less.

11. The run-flat tire (2) according to claim 10, wherein
the sidewall reinforcing layer (16) has 100°Ctan δ of 0.05 or less.

12. The run-flat tire (2) according to any one of claims 1 to 11, wherein
the sidewall reinforcing layer (16) has 60°Ctan δ of 0.16 or less.

13. The run-flat tire (2) according to claim 12, wherein
the sidewall reinforcing layer (16) has 60°Ctan δ of 0.15 or less.

14. The run-flat tire (2) according to claim 13, wherein
the sidewall reinforcing layer (16) has 60°Ctan δ of 0.1 or less.

15. The run-flat tire (2) according to any one of claims 1 to 14, wherein
the uneven portion (66) has a width of 1 mm or more and 8 mm or less and has a convex portion (66a) having a height (h) of 0.3 mm or more and 2.5 mm or less with respect to the concave portion (66b) formed at a pitch (p) of 6 mm or more and 35 mm or less.

## Patentansprüche

1. Notlaufreifen (2), der mit einer Seitenwandverstärkungsschicht (16) innerhalb der Seitenwand (8) versehen ist, die einen unebenen Abschnitt (66) auf dem Oberflächenabschnitt der Seitenwand (8) aufweist,
**dadurch gekennzeichnet, dass**
die Seitenwandverstärkungsschicht (16) die Bruchfestigkeit TB (MPa) × Bruchdehnung EB (%) von 320 oder mehr bei 100°C und einen Verlusttangens bei 100°C, 100°Ctan δ, von 0,06 oder weniger aufweist; und
die Seitenwand (8) einen Verlusttangens bei 60°C, 60°Ctan δ, von 0,17 oder weniger aufweist und die Differenz zwischen dem Verlusttangens bei 60°C und dem Verlusttangens bei 75°C, |60°Ctan δ-75°Ctan δ|, weniger als 0,05 beträgt.

2. Notlaufreifen (2), der mit einer Seitenwandverstärkungsschicht (16) innerhalb der Seitenwand (8) versehen ist, die einen unebenen Abschnitt (66) auf dem Oberflächenabschnitt der Seitenwand (8) aufweist,
**dadurch gekennzeichnet, dass**
die Seitenwandverstärkungsschicht (16) die Bruchfestigkeit TB (MPa) × Bruchdehnung EB (%) von 320 oder mehr bei 100°C und einen Verlusttangens bei 100°C, 100°Ctan δ, von 0,06 oder weniger aufweist;
die Seitenwand (8) einen Verlusttangens bei 60°C, 60°Ctan δ, von 0,17 oder weniger aufweist; und
die Differenz zwischen dem Verlusttangens der Seitenwandverstärkungsschicht (16) bei 100°C und dem Verlusttangens der Seitenwand (8) bei 75°C, |100°Ctan δ-75°Ctan δ|, weniger als 0,1 beträgt.

3. Notlaufreifen (2), der mit einer Seitenwandverstärkungsschicht (16) innerhalb der Seitenwand (8) versehen ist, die einen unebenen Abschnitt (66) auf dem Oberflächenabschnitt der Seitenwand (8) aufweist,
**dadurch gekennzeichnet, dass**
die Seitenwandverstärkungsschicht (16) die Bruchfestigkeit TB (MPa) × Bruchdehnung EB (%) von 320 oder mehr bei 100°C und einen Verlusttangens bei 100°C, 100°Ctan δ, von 0,06 oder weniger aufweist; und
die Seitenwand (8) einen Verlusttangens bei 60°C, 60°Ctan δ, von 0,17 oder weniger aufweist; und
die Differenz zwischen dem Verlusttangens der Seitenwandverstärkungsschicht (16) bei 100°C und dem Verlusttangens der Seitenwand (8) bei 60°C, |100°Ctan δ-60°Ctan δ|, weniger als 0,15 beträgt.

4. Notlaufreifen (2) nach Anspruch 1 oder Anspruch 3, wobei die Differenz zwischen dem Verlusttangens der Seitenwandverstärkungsschicht (16) bei 100°C und dem Verlusttangens der Seitenwand (8) bei 75°C,
|100°Ctan δ-75°Ctan δ|, weniger als 0,1 beträgt.

5. Notlaufreifen (2) nach Anspruch 1 oder Anspruch 2, wobei die Differenz zwischen dem Verlusttangens der Seitenwandverstärkungsschicht (16) bei 100°C und dem Verlusttangens der Seitenwand (8) bei 60°C,
|100°Ctan δ-60°Ctan δ|, weniger als 0,15 beträgt.

6. Notlaufreifen (2) nach Anspruch 1, wobei
die Differenz zwischen dem Verlusttangens der Seitenwandverstärkungsschicht (16) bei 100°C und dem Verlusttangens der Seitenwand (8) bei 75°C, |100°Ctan δ-75°Ctan δ|, weniger als 0,1 beträgt; und
die Differenz zwischen dem Verlusttangens der Seitenwandverstärkungsschicht (16) bei 100°C und dem Verlusttangens der Seitenwand (8) bei 60°C, |100°Ctan δ-60°Ctan δ|, weniger als 0,15 beträgt.

7. Notlaufreifen (2) nach einem der Ansprüche 1-6, wobei die Seitenwandverstärkungsschicht (16) die Bruchfestigkeit TB (MPa) × Bruchdehnung EB (%) von 350 oder mehr bei 100°C aufweist.

8. Notlaufreifen (2) nach Anspruch 7, wobei die Seitenwandverstärkungsschicht (16) die Bruchfestigkeit TB (MPa) × Bruchdehnung EB (%) von 400 oder mehr bei 100°C aufweist.

9. Notlaufreifen (2) nach Anspruch 8, wobei die Seitenwandverstärkungsschicht (16) die Bruchfestigkeit TB (MPa) × Bruchdehnung EB (%) von 700 oder mehr bei 100°C aufweist.

10. Notlaufreifen (2) nach einem der Ansprüche 1-9, wobei die Seitenwandverstärkungsschicht (16) 100°Ctan δ von 0,055 oder weniger aufweist.

11. Notlaufreifen (2) nach Anspruch 10, wobei die Seitenwandverstärkungsschicht (16) 100°Ctan δ von 0,05 oder weniger aufweist.

12. Notlaufreifen (2) nach einem der Ansprüche 1 bis 11, wobei die Seitenwandverstärkungsschicht (16) 60°Ctan δ von 0,16 oder weniger aufweist.

13. Notlaufreifen (2) nach Anspruch 12, wobei die Seitenwandverstärkungsschicht (16) 60°Ctan δ von 0,15 oder weniger aufweist.

14. Notlaufreifen (2) nach Anspruch 13, wobei die Seitenwandverstärkungsschicht (16) 60°Ctan δ von 0,1 oder weniger aufweist.

15. Notlaufreifen (2) nach einem der Ansprüche 1 bis 14, wobei der unebene Abschnitt (66) eine Breite von 1 mm oder mehr und 8 mm oder weniger aufweist und einen konvexen Abschnitt (66a) mit einer Höhe (h) von 0,3 mm oder mehr und 2,5 mm oder weniger in Bezug auf den konkaven Abschnitt (66b) aufweist, der mit einem Abstand (p) von 6 mm oder mehr und 35 mm oder weniger ausgebildet ist.

## Revendications

1. Pneumatique pour roulage à plat (2) doté d'une couche de renforcement de paroi latérale (16) à l'intérieur de la paroi latérale (8), qui a une portion irrégulière (66) sur la portion de surface de la paroi latérale (8),
**caractérisé en ce que**
la couche de renforcement de paroi latérale (16) a la résistance à la rupture TB (MPa) × allongement à la rupture EB (%) de 320 ou plus à 100 °C, et la tangente de perte à 100 °C, 100°Ctan δ, de 0,06 ou moins ; et
la paroi latérale (8) a une tangente de perte à 60 °C, 60°Ctan δ, de 0,17 ou moins, et a la différence entre la tangente de perte à 60 °C et la tangente de perte à 75 °C, |60°Ctan δ - 75°Ctan δ|, inférieure à 0,05.

2. Pneumatique pour roulage à plat (2) doté d'une couche de renforcement de paroi latérale (16) à l'intérieur de la paroi latérale (8), qui a une portion irrégulière (66) sur la portion de surface de la paroi latérale (8),
**caractérisé en ce que**
la couche de renforcement de paroi latérale (16) a la résistance à la rupture TB (MPa) × allongement à la rupture EB (%) de 320 ou plus à 100 °C, et la tangente de perte à 100 °C, 100°Ctan δ, de 0,06 ou moins ;
la paroi latérale (8) a une tangente de perte à 60 °C, 60°Ctan δ, de 0,17 ou moins ; et
la différence entre la tangente de perte de la couche de renforcement de paroi latérale (16) à 100 °C et la tangente de perte de la paroi latérale (8) à 75 °C, |100°Ctan δ - 75°Ctan δ|, est inférieure à 0,1.

3. Pneumatique pour roulage à plat (2) doté d'une couche de renforcement de paroi latérale (16) à l'intérieur de la paroi latérale (8), qui a une portion irrégulière (66) sur la portion de surface de la paroi latérale (8),
**caractérisé en ce que**
la couche de renforcement de paroi latérale (16) a la résistance à la rupture TB (MPa) × allongement à la rupture EB (%) de 320 ou plus à 100 °C, et la tangente de perte à 100 °C, 100°Ctan δ, de 0,06 ou moins ; et
la paroi latérale (8) a une tangente de perte à 60 °C, 60°Ctan δ, de 0,17 ou moins ; et
la différence entre la tangente de perte de la couche de renforcement de paroi latérale (16) à 100 °C et la tangente de perte de la paroi latérale (8) à 60 °C, |100°Ctan δ - 60°Ctan δ|, est inférieure à 0,15.

4. Pneumatique pour roulage à plat (2) selon la revendication 1 ou 3, dans lequel
la différence entre la tangente de perte de la couche de renforcement de paroi latérale (16) à 100 °C et la tangente de perte de la paroi latérale (8) à 75 °C, |100°Ctan δ - 75°Ctan δ|, est inférieure à 0,1.

5. Pneumatique pour roulage à plat (2) selon la revendication 1 ou 2, dans lequel
la différence entre la tangente de perte de la couche de renforcement de paroi latérale (16) à 100 °C et la tangente de perte de la paroi latérale (8) à 60 °C, |100°Ctan δ - 60°Ctan δ|, est inférieure à 0,15.

6. Pneumatique pour roulage à plat (2) selon la revendication 1, dans lequel
la différence entre la tangente de perte de la couche de renforcement de paroi latérale (16) à 100 °C et la tangente de perte de la paroi latérale (8) à 75 °C, |100°Ctan δ - 75°Ctan δ|, est inférieure à 0,1 ; et
la différence entre la tangente de perte de la couche de renforcement de paroi latérale (16) à 100 °C et la tangente de perte de la paroi latérale (8) à 60 °C, |100°Ctan δ - 60°Ctan δ|, est inférieure à 0,15.

7. Pneumatique pour roulage à plat (2) selon l'une quelconque des revendications 1 à 6, dans lequel
la couche de renforcement de paroi latérale (16) a la résistance à la rupture TB (MPa) × allongement à la rupture EB (%) de 350 ou plus à 100 °C.

8. Pneumatique pour roulage à plat (2) selon la revendication 7, dans lequel la couche de renforcement de paroi latérale (16) a la résistance à la rupture TB (MPa) × allongement à la rupture EB (%) de 400 ou plus à 100 °C.

9. Pneumatique pour roulage à plat (2) selon la revendication 8, dans lequel la couche de renforcement de paroi latérale (16) a la résistance à la rupture TB (MPa) × allongement à la rupture EB (%) de 700 ou plus à 100 °C.

10. Pneumatique pour roulage à plat (2) selon l'une quelconque des revendications 1 à 9, dans lequel
la couche de renforcement de paroi latérale (16) a une valeur 100°Ctan δ de 0,055 ou moins.

11. Pneumatique pour roulage à plat (2) selon la revendication 10, dans lequel
la couche de renforcement de paroi latérale (16) a une valeur 100°Ctan δ de 0,05 ou moins.

12. Pneumatique pour roulage à plat (2) selon l'une quelconque des revendications 1 à 11, dans lequel
la couche de renforcement de paroi latérale (16) a une valeur 60°Ctan δ de 0,16 ou moins.

13. Pneumatique pour roulage à plat (2) selon la revendication 12, dans lequel
la couche de renforcement de paroi latérale (16) a une valeur 60°Ctan δ de 0,15 ou moins.

14. Pneumatique pour roulage à plat (2) selon la revendication 13, dans lequel
la couche de renforcement de paroi latérale (16) a une valeur 60°Ctan δ de 0,1 ou moins.

15. Pneumatique pour roulage à plat (2) selon l'une quelconque des revendications 1 à 14, dans lequel
la portion irrégulière (66) a une largeur de 1 mm ou plus et de 8 mm ou moins, et a une portion convexe (66a) ayant une hauteur (h) de 0,3 mm ou plus et de 2,5 mm ou moins par rapport à la portion concave (66b) formée à un pas (p) de 6 mm ou plus et de 35 mm ou moins.
